# EUROPEAN PATENT APPLICATION

(11) **EP 3 225 820 A1**
(43) Date of publication of application: **04.10.2017**
(21) Application number: 16162700.5
(22) Date of filing: 29.03.2016
(51) Int. Cl.: F02D 19/02, G01F 23/30, G01F 23/32, G01F 23/36

(54) **VEHICLE TANK EQUIPPED WITH A LIQUID LEVEL SENSING SYSTEM**

(71) Applicant: Plastic Omnium Advanced Innovation and Research, 1120 Bruxelles (BE)
(72) Inventor: LEONARD, Stéphane, B-1090 BRUSSELS (BE)
(74) Representative: Remy, Vincent Noel Paul

(57) **Abstract**

It is proposed a vehicle tank for the storage of a liquid capable of freezing, the vehicle tank is s equi pped with a liquid level sensing system comprising:
- a float adapted to move upwardly and downwardly i n the liquid tank as a function of the liquid level in the tank;
- an arm support i ng the float; and
- an i ce protection structure, sai d arm bei ng at least partially surrounded by the ice protection structure, and sai d arm bei ng able to move slidably upwardly and downwardly in the ice protection structure.

## Description

### Field of the Invention

The present invention relates to a liquid tank for a vehicle, more particularly to a liquid tank equipped with a liquid level sensing system (i.e. level sensor).

### Background

For urea tank application, it has been proposed several systems for measuring the level of urea in the tank.

A first known system is based on the use of capacitive sensing technologies. Such technologies are based on capacitors normally present over the entire height of the tank; their capacitances vary according to the height of liquid in the tank. The capacitors are immersed in the liquid and supply a reference value of the dielectric constant of the liquid. An appropriate electronic circuit determines the level of the liquid in the tank.

A second known system is based on the use of ultrasonic transceivers. Such devices are configured to produce an ultrasonic signal and to capture the ultrasonic signals reflected at a surface of the liquid level. Thus, from the transit time of the ultrasonic signal for the distance from the ultrasonic sensor to the surface of the liquid measured; the liquid level can be determined.

A third known system is based on the use of magnetic reed switch technology. The magnetic reed switches are arranged along a column. The reed switches close in the proximity of a magnetic field which may be produced by a magnet held in a float rising and falling with the liquid level, in order to provide a continuous output signal that changes monotonically, multiple switches are used (about 1 switch every 10 mm), each switch being combined with a resistor. All of these systems are complex and expensive.

### Summary

An object of the present invention is to propose a liquid level sensing system which is simpler and more cost-effective than the systems of the prior art described above.

According to the invention there is provided a vehicle tank for the storage of a liquid capable of freezing, the vehicle tank is equipped with a liquid level sensing system comprising:
- a float adapted to move upwardly and downwardly in the liquid tank as a function of the liquid level in the tank;
- an arm supporting the float; and
- an ice protection structure, said arm being at least partially surrounded by the ice protection structure, and said arm being able to move slidably upwardly and downwardly in the ice protection structure.

Thus, it is proposed an improved lever arm float-based system for use with liquid capable of freezing. More precisely the liquid level sensing system of the present invention comprises a structure configured to protect the arm of the liquid level sensing system from impacts of ice formed at low temperature during dynamic conditions such that acceleration or deceleration of the vehicle.
Lever arm float-based systems are simple systems.
Lever arm float-based systems are known but have never been used in liquid capable of freezing.

Said ice protection structure surrounds at least partially the arm of the liquid level sensing system in such way that the arm of the liquid level sensing system is able to move slidably upwardly and downwardly in the ice protection structure in function of the liquid level in the tank.
The ice protection structure is limiting the lateral movement of the arm in order to avoid a permanent deformation of the arm and / or of the rotation axis.
In other words, the ice protection structure is arranged, entirely or not, around the arm of the liquid level sensing system in such manner that the arm is able to slide into the ice protection structure depending on the liquid level in the tank. Thus, the ice protection structure does not prevent the liquid level sensing system operation.

In a preferred embodiment, the float is also at least partially surrounded by the ice protection structure. The ice protection structure is also configured to protect the float of the liquid level sensing system from impacts of ice formed at low temperature during dynamic conditions such that acceleration or deceleration of the vehicle and from lateral displacements of the float which could occur due to the inertia of the ice when the ice is formed all around the float.

The ice protection structure surrounds at least partially the arm of the liquid level sensing system.

Advantageously the ice protection structure comprises at least two walls arranged on each of the sides of the arm of the liquid level sensing system. Thus, each side of the arm is protected against ice impacts.

In a first embodiment, the ice protection structure comprises two walls arranged in parallel to each other, said arm being mounted in between the two walls.
Thus, the full length of the arm and each of the sides of the arm are protected against ice impacts. The arm supporting the float mounted in between the two walls is still able to move slidably upwardly and downwardly as a function of the liquid level in the tank.

In a second embodiment, the ice protection structure comprises at least two sets of walls. The sets of walls are spaced apart from each other by a predetermined distance(s). The arm of the liquid level sensing system is mounted in between the walls.
The predetermined distance corresponds to the acceptable length of the arm comprised between two sets of walls which can be impacted by ice without causing any permanent deformation of the arm during dynamic conditions of the vehicle.
In a particular embodiment, every set of walls is spaced apart from each other by an identical predetermined distance.
In another embodiment, the predetermined distance can be different from one set of walls to another, provided that the predetermined distances are such that the arm can be impacted by ice without causing any permanent deformation of the arm.
In a particular embodiment, the walls are arranged parallel to the arm of the level sensing system.

In a third and particular embodiment, the ice protection structure comprises at least two staggered walls. The walls are arranged close to the arm of the level sensing system, in an alternating manner on each of the sides of the arm and on the full length of the arm. Thus, the full length is protected but on only one side of the arm in an alternating manner.
Advantageously but not necessarily, the walls arranged on one side of the arm are spaced apart from each other by a predetermined distance(s). The predetermined distance corresponds to the acceptable length of the arm comprised between two walls on one side of the arm which can be impacted by ice without causing any permanent deformation of the arm during dynamic conditions of the vehicle.
In a particular embodiment, the walls are arranged parallel to the arm of the level sensing system.

In an advantageous embodiment, each wall of the ice protection structure has a T shape or U shape profile. The T or U shape profile of the walls allows strengthening the impact resistance of the walls and therefore enhances the protection of the arm of the liquid level sensing system against ice impacts, at low temperature and during dynamic conditions.

In an advantageous embodiment, one of the ice protection structures described above covers the full length of the arm of the liquid level sensing system. Thus, the full length of the arm of the liquid level sensing system is protected against ice impacts.

In a fourth embodiment, the ice protection structure is a meshed cage. The meshed cage is a structure surrounding entirely the arm and the float of the liquid level sensing system. The meshes of the cage have predetermined dimensions. The predetermined dimensions of the meshes are such that any ice of significant size cannot penetrate through the meshes and damage the arm and the float of the liquid level sensing system. The mesh dimensions are determined as a function of the acceptable ice size which can penetrate through and impact the arm and the float without any permanent deformation during dynamic conditions of the vehicle.
The meshed cage presents also the advantage to protect the float from lateral displacements of the float due to the inertia of the ice, when ice is formed all around the float. In a particular embodiment, every mesh of the cage has the same dimension.
In another embodiment, the meshes of the cage have different dimensions.

The ice protection structure of the invention surrounding partially or entirely the arm and/or the float of the liquid level sensing system, is not a closed system. It is an opened system wherein the liquid circulates freely inside. Thus, the arm supporting the float operates normally as a function of the liquid level in the tank. In other words, the arm and the float are permanently in contact with the liquid within the tank and move freely, upwardly and downwardly in the ice protection structure as a function of the level of the liquid in the tank. Thus, the ice protection structure does not distort the indication of the liquid level in the tank.

Advantageously, the ice protection structure of the invention may be made of any material. Preferably, it is based on a thermoplastic. In this case, it is obviously convenient to choose the material or materials in such a way that they withstand impacts. Of course, the materials chosen must be compatible with the liquids with which they have to be in contact, in particular compatible with ammonia precursor solution.
In particular in the case in which the liquid tank is a urea tank made of plastic, the ice protection structure according to the invention is also made of plastic. The term "plastic" is understood to mean any polymeric synthetic material, whether thermoplastic or thermosetting, as well as blends of at least two of these materials. The intended polymers comprise both homopolymers and copolymers (especially binary or ternary copolymers). Examples of such copolymers are, non-limitingly: random copolymers, linear block copolymers, non-linear block copolymers, and graft copolymers. Thermoplastic polymers, including thermoplastic elastomers, and blends thereof are preferred. Any type of thermoplastic polymer or copolymer is suitable.

The ice protection structure of the invention is attached at least at one point of a wall of the tank.
The ice protection structure can be attached either chemically or mechanically at least at one point of a wall of the tank.

In a preferred embodiment, the ice protection structure is made in one piece with a wall of the tank. The ice protection structure is made by injection during the tank manufacturing process. The ice protection structure material is therefore the same as the tank material.
The advantage of this embodiment is the solidity of the ice protection structure attachment, compared to an ice protection structure not made in one piece with the wall of the tank. In this embodiment the ice protection structure is solidly and reliably attached.

Alternatively, the ice protection structure can be attached to the tank by plastic overmoulding process.
Preferably, the ice protection structure material is compatible with the tank material.

Alternatively, the ice protection structure can also be attached onto wall of the tank by an infra-red welding process. Such process is for example described in patent document US 7,829,819.
The ice protection structure material has to be compatible with the tank material.

Alternatively, the ice protection structure can be attached mechanically to the tank by sliding or by clipping to a fixed part of the wall of the tank, or by any other means known in the state of the art.
The advantage of such particular embodiments is the fact that the material of the ice protection structure has not to be necessarily compatible with the material of the tank.

According to the invention, the liquid level sensing system is a sensor type MAPPS or a Hall Effect rotatory sensor.

The liquid tank of the invention can contain all types of liquid capable of freezing, for example and non-limitingly, fuel, ammonia precursor solution or ammonia solution.

In a preferred embodiment, the liquid is an ammonia precursor solution, typically AdBlue®,which is a urea aqueous solution freezing at a temperature below -11°C.

In another preferred embodiment, the liquid is an aqueous ammonia solution.
The aqueous ammonia solution may be obtained by using different techniques. One known technique is based on the use of an ammonia precursor solution and a catalyst. Such systems are disclosed in patent applications EP 13182919.4, EP 12199278.8, EP 12199278.8 and EP 13182919.4 in the name of the Applicant, which are included herein by reference. The freezing point of aqueous ammonia solution is depending on its concentration. For instance for an aqueous ammonia solution containing 10,28% of ammonia in weight by solution, the freezing point is -14°C.

In another embodiment, the liquid is a fuel which freezes in the environment temperature range applicable for the vehicle. The freezing point is depending on the type of fuel and the additives added.

In an advantageous embodiment, the liquid tank is a urea tank, an aqueous ammonia tank or a fuel tank.

### Brief description of the figures

The accompanying drawings are used to illustrate presently preferred non-limiting exemplary embodiments of devices of the present invention. The above and other advantages of the features and objects of the invention will become more apparent and the invention will be better understood from the following detailed description when read in conjunction with the accompanying drawings, in which:
Figure 1 illustrates schematically a first embodiment of an ice protection structure of the invention surrounding completely the arm of a liquid level sensing system;
Figure 2 illustrates schematically a second embodiment of an ice protection structure of the invention surrounding partially the arm of a liquid level sensing system;
Figure 3 illustrates schematically a third embodiment of an ice protection structure of the invention surrounding partially the arm of a liquid level sensing system;
Figure 4 illustrates schematically a fourth embodiment of an ice protection structure of the invention surrounding partially the arm of a liquid level sensing system;
Figure 5 illustrates schematically a fifth embodiment of an ice protection structure of the invention surrounding all of a liquid level sensing system.

### Description of embodiments

The present invention provides a vehicle tank (non represented) for the storage of a liquid capable of freezing, the vehicle tank is equipped with a liquid level sensing system 100 comprising:
- a float 102 adapted to move upwardly and downwardly in the liquid tank as a function of the liquid level in the tank;
- an arm 101 supporting the float 102; and
- an ice protection structure 110, said arm 101 being at least partially surrounded by the ice protection structure, and said arm being able to move slidably upwardly and downwardly in the ice protection structure.

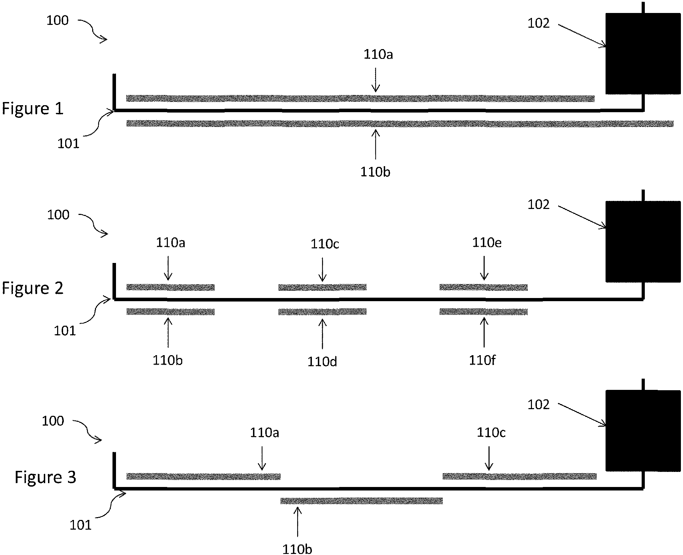

Figure 1 illustrates an ice protection structure 110 surrounding an arm 101 of a liquid level sensing system 100 according a first embodiment of the present invention.
The ice protection structure 110 of the vehicle tank (non represented) of the invention surrounds the full length of the arm 101 of the liquid level sensing system 100.
The ice protection structure 110 comprises two walls 110a, 110b arranged on each of the sides of the arm 101 of the liquid level sensing system. The two walls are arranged in parallel to each other. The arm is mounted in between the two walls.
Thus, the full length of the arm and each of the sides of the arm are protected against lateral ice impacts. Moreover, the walls limit the lateral movement of the arm in order to avoid a permanent deformation of the arm and / or of the rotation axis. The arm supporting the float mounted in between said two walls is still able to move slidably upwardly and downwardly as a function of the liquid level in the tank.
The float 102 is partially surrounded by the ice protection structure. The ice protection structure 110 extends to the base of the float 102. Thus, the ice protection structure also prevents partially the lateral displacement of the float which could occur due to the inertia of the ice when the ice is formed all around the base of the float.
The arm 101 of the liquid level sensing system 100 is mounted in between the two parallel walls 110a, 110b of the ice protection structure. The arm 101 is inserted into the ice protection structure 110 in such manner that the arm 101 supporting the float 102 is able to move slidably upwardly and downwardly in the ice protection structure as a function of the liquid level in the tank.
The ice protection structure 110 is an opened system wherein the liquid circulates freely inside. The liquid can circulate freely through each of the extremities of the walls 110a, 110b. The arm 101 and the float 102 of the liquid level sensing system 100 are thus permanently in contact with the liquid within the tank and move freely in function of the level of the liquid in the tank. Thus, the ice protection structure does not prevent a good indication of the liquid level in the tank.
The ice protection structure 110 is attached at least at one point of a wall of the tank.
The ice protection structure can be attached either chemically or mechanically at least at one point of the wall of the tank.
In a preferred embodiment, the ice protection structure is made in one piece with the wall of the tank. The ice protection structure is made by injection during the tank manufacturing process. The ice protection structure material is therefore the same as the tank material. Such technique is well known for a skilled person and should therefore not be explained further.
The advantage of this embodiment is the solidity of the ice protection structure attachment, compared to an ice protection structure not made in one piece with the wall of the tank. In this embodiment the ice protection structure is solidly and reliably attached.
Alternatively, the ice protection structure can also be chemically attached to the tank by plastic overmoulding process, by an infra-red welding process, or be mechanically attached by sliding or by clipping to a fixed part of the wall of the tank, or by any other mean known in the state of the art.

Figure 2 illustrates an ice protection structure 110 surrounding an arm 101 of a liquid level sensing system 100 according a second embodiment of the present invention.
The ice protection structure 110 of the vehicle tank (non represented) of the invention surrounds the full length of the arm 101 of the liquid level sensing system 100.
The ice protection structure comprises three sets of parallel walls 110(a-f). The sets of parallel walls are spaced apart from each other by a predetermined distance.
The predetermined distance corresponds to the acceptable length of the arm comprised between two sets of parallel walls which can be impacted by ice without causing any permanent deformation of the arm during dynamic conditions of the vehicle. In this embodiment, every set of parallel walls is spaced apart from each other by an identical predetermined distance.
In another particular embodiment, the sets of parallel walls are spaced apart from each other by different predetermined distances, provided that the predetermined distances are such that the arm can be impacted by ice without causing any permanent deformation of the arm.
In the embodiment of the Figure 2, the arm 101 supporting the float 102 of the liquid level sensing system 100 is mounted in between the three sets of parallel walls 110(a-f). In other words, the arm 101 is inserted into the ice protection structure 110 in such manner that the arm 101 supporting the float 102 is able to move slidably upwardly and downwardly in the ice protection structure as a function of the liquid level in the tank. The ice protection 110 structure also limits the lateral movement of the arm 101 in order to avoid a permanent deformation of the arm and / or of the rotation axis.
The ice protection structure 110 is an opened system; the liquid circulates freely between the sets of walls. The circulation is made easier compared to the structure of the ice protection structure described in Figure 1. The arm 101 and the float 102 of the liquid level sensing system 100 are permanently in contact with the liquid within the tank and move freely in function of the level of the liquid in the tank. In this way, the ice protection structure does not prevent a correct indication of the liquid level in the tank.

Figure 3 illustrates an ice protection structure 110 surrounding an arm 101 of a liquid level sensing system 100 according a third embodiment of the present invention.
The ice protection structure 110 comprises three parallel staggered walls 110a, 110b, 110c. The walls are arranged parallel to the arm of the level sensing system, in an alternating manner on each of the sides of the arm and on the full length of the arm. Thus, the full length is protected but on only one side of the arm in an alternating manner.
Advantageously, the walls arranged on one side of the arm are spaced apart from each other by a predetermined distance. The predetermined distance corresponds to the acceptable length of the arm comprised between two walls on one side of the arm which can be impacted by ice without causing any permanent deformation of the arm during dynamic conditions of the vehicle.
The arm 101 of the liquid level sensing system 100 is mounted in between the three parallel staggered walls 110a, 110b, 110c in such manner that the arm 101 supporting the float 102 is able to move slidably upwardly and downwardly in the ice protection structure as a function of the liquid level in the tank. The ice protection structure 110 also limits the lateral movement of the arm 101 in order to avoid a permanent deformation of the arm and / or of the rotation axis.
The ice protection structure 110 is an opened system; the liquid circulates freely between the walls of the ice protection structure. The liquid circulation is made easier compared to the ice protection structure described in Figure 1. The arm 101 and the float 102 of the liquid level sensing system 100 are permanently in contact with the liquid within the tank and move freely in function of the level of the liquid in the tank. In this way, the ice protection structure does not distort the indication of the liquid level in the tank.

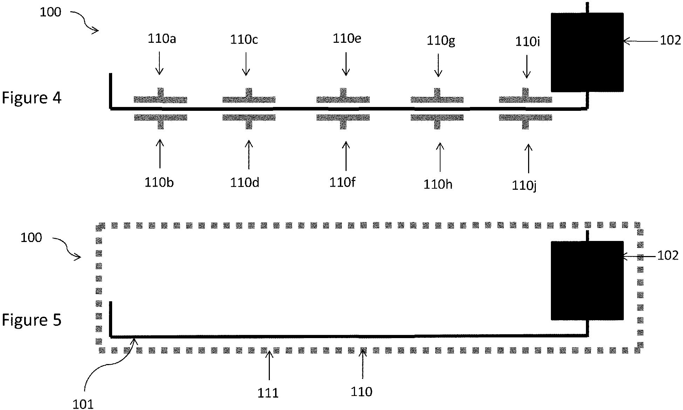

Figure 4 illustrates an ice protection structure 110 surrounding an arm 101 of a liquid level sensing system 100, according a fourth embodiment of the present invention.
In this embodiment, the ice protection structure comprises five sets of parallel walls 110(a-j), spaced apart from each other by a predetermined distance. This embodiment differs from the one of the Figure 2 in that the walls 110(a-j) of the ice protection structure 110 have a T shape profile. The T shape profile of the walls allows strengthening the impact resistance of the walls and therefore enhances the protection of the arm 101 of the liquid level sensing system against ice impacts which could occur with frozen liquid at low temperature during dynamic conditions.

Figure 5 illustrates an ice protection structure 110 surrounding an arm 101 supporting a float 102 of a liquid level sensing system 100 according a fifth embodiment of the present invention.
The ice protection structure 110 is a meshed cage. The arm 101 and the float 102 of the liquid level sensing system 100 are totally surrounded by such ice protection structure.
The meshes 111 of the cage have a predetermined dimension. The predetermined dimension of the meshes 111 is such that any ice of significant size cannot penetrate through the meshes and damage the arm and the float of the liquid level sensing system. The mesh dimension is determined as a function of the acceptable ice size which can penetrate through and impact the arm and the float without any permanent deformation during dynamic conditions of the vehicle.
The meshed cage presents also the advantage to protect the float from lateral displacements of the float due to the inertia of the ice, when ice is formed all around the float. In this particular embodiment, every mesh of the cage has the same dimension.
The arm 101 supporting the float 102 of the liquid level sensing system 100 is mounted into the meshed cage 110 in such manner that the arm 101 supporting the float 102 is able to move slidably upwardly and downwardly in the ice protection structure as a function of the liquid level in the tank.
The ice protection structure 110 comprising a plurality of meshes 111 is an opened system; the liquid circulates freely between the meshes 111 of the ice protection structure 110. The liquid circulation is made easier compared to the ice protection structure described in Figure 1. The arm 101 and the float 102 of the liquid level sensing system 100 are permanently in contact with the liquid within the tank and move freely in function of the level of the liquid in the tank. In this way, the ice protection structure does not distort the indication of the liquid level in the tank.
In this embodiment, the float 102 is entirely surrounded by the ice protection structure 110. Thus, the ice protection structure 110 also prevents the lateral displacement of the float 102 which could occur due to the inertia of the ice when the ice is formed all around the float.

## Claims

1. Vehicle tank for the storage of a liquid capable of freezing, the vehicle tank is equipped with a liquid level sensing system comprising:
- a float adapted to move upwardly and downwardly in the liquid tank as a function of the liquid level in the tank;
- an arm supporting the float; and
- an ice protection structure, said arm being at least partially surrounded by the ice protection structure, and said arm being able to move slidably upwardly and downwardly in the ice protection structure.

2. Vehicle tank according to claim 1, wherein the float is at least partially surrounded by the ice protection structure.

3. Vehicle tank according to claim 1 or 2, wherein the ice protection structure is attached at least at one point of a wall of the tank.

4. Vehicle tank according to claim 1 or 2, wherein the ice protection structure is made in one piece with a wall of the tank.

5. Vehicle tank according to any one of claims 1-4, wherein the ice protection structure comprises at least two walls arranged on each side of the arm.

6. Vehicle tank according to claim 5, wherein the ice protection structure comprises two walls arranged in parallel to each other, said arm being mounted in between the two walls.

7. Vehicle tank according to claim 5, wherein the ice protection structure comprises at least two sets of walls, the sets of walls being spaced apart from each other by a predetermined distance (s), said arm being mounted in between the walls.

8. Vehicle tank according to any one of claims 5-7, wherein each wall of the ice protection structure has a T shape or U shape profile.

9. Vehicle tank according to any one of claims 1-4, wherein the ice protection structure is a meshed cage.

10. Vehicle tank according to any one of the previous claims, wherein the liquid tank is a urea tank, an aqueous ammonia tank or a fuel tank.
